# EUROPEAN PATENT SPECIFICATION

(11) **EP 0 219 479 B1**
(45) Date of publication and mention of the grant of the patent: **14.09.1994**
(21) Application number: 86850351.7
(22) Date of filing: 14.10.1986
(51) Int. Cl.: G02F 1/137, G02F 1/133

(54) **Improvements of ferroelectric liquid crystal devices**
Ferroelektrische Flüssigkristallvorrichtungen
Cristal liquide ferroélectrique

(30) Priority: 14.10.1985 SE 8504761
(43) Date of publication of application: 22.04.1987
(73) Proprietor: FLC Innovation AB, S-412 88 Göteborg (SE)
(72) Inventor: Lagerwall, Sven T., S-41475 Göteborg (SE); Wahl, Jürgen, D-6232 Bad Soden 2 (DE)
(74) Representative: Grennberg, Erik Bertil

(56) References cited:
- EP-A- 0 032 362
- EP-A- 0 201 341
- EP-A- 0 203 569
- DE-A- 3 502 160
- MOLECULAR CRYSTALS AND LIQUID CRYSTALS, vol. 114, no. 1/3, 1984, pp. 151-187, Gordon and Breach, Science Publishers, Inc. and OPA Ltd., US ; S.T. LAGERWALL et al. : "Ferroelectric liquid crystals"
- FERROELECTRICS, vol. 59, 1984, pp. 25-67, Gordon and Breach, Science Publishers, Inc., US ; N.A. CLARK et al.: "Surface-stabilized ferroelectric liquid crystal electro-optics : new multistate structures and devices"
- MOLECULAR CRYSTALS AND LIQUID CRYSTALS, vol. 110, no. 1/4, 1984, pp. 175-203, Gordon and Breach, Science Publishers, Inc., New York, US ; J.W. GOODBY et al.:"Ferroelectric liquid crystals - structure and design"
- CONFERENCE RECORD OF THE 1985 INTERNATIONAL DISPLAY RESEARCH CONFERENCE, San Diego, California, 15-17 October 1985, pp. 213-221, IEEE, New York, US ; S.T. LAGERWALL et al.: "Ferroelectric liquid crystals for displays"

## Description

The present invention relates to the art of ferroelectric liquid crystals, in particular the species thereof named surface-stabilized ferroelectric liquid crystals (SSFLC), in which any inherent helix, if present in the bulk, would nevertheless never appear as a result of surface interactions. The crystal state is commonly referred as bookshelf geometryö which means that the layers are essentially perpendicular relative to the bounding surfaces.

The invention thus relates to a liquid crystal device having a liquid crystal layer arranged between two parallel surfaces comprising a polymer, said liquid crystal comprising a ferroelectric liquid crystal substance arranged in bookshelf geometry and bistably switchable between two states. Such a device is known e.g. from US-A-4,367,924.

The general object of the present invention is to improve the addressability of such a device, in particular centering on the problems of alignment due to surface interaction. The invention starts with an improved understanding of the alignment of the molecules to the surface coating material. The alignment of the molecules to parallelism with a polymer surface is well known, and it is known, e.g. from DE-A-35 02 160 to obtain a preferential direction in the plane of the plates by rubbing the surface. What has not before been realized, however, is that the rubbing, in the case of ferroelectric liquid crystals, besides its directional effect, also will have a direct influence on the preferred surface polarization state at each surface.

As pointed out hereunder and developed in some detail in Ferroelectrics, 1984, Vol. 59, pp. 69-116, the surface states having the polarization vector pointing into or out of the polymer coating surface cannot be expected to have the same energy; one of them should thus be preferred.

If the polar interaction is sufficiently strong, this will lead to the undesired splay state, on page 79 of the referred article called the non-symmetric state. In order to achieve symmetrization of the display, the tendency for splay must be suppressed, which can be done by weakening the polar interaction at the surfaces. A further increase in symmetry can be achieved by using the polar effect of the rubbing in such a way that it counteracts the natural surface polarization preference at each surface. It has finally been observed that a certain treatment by an AC field further enhances the symmetry properties of the display by ameliorating the alignment.

It is the general object of the present invention, in view of and considering the splay problem, to obtain a situation of bistability which is electrically symmetric, remedying both the problems of splay and of asymmetry in switching by electric fields between the bistable states.

Accordingly, the present invention provides a liquid crystal device as claimed in claim 1 and a method as claimed in claim 3.

According to the invention, a mixture of ferroelectric substances is used. Using mixtures of different ferroelectric materials is known per se, e.g. from US-A-4 367 924. However, in the present case, the different substances have opposite polar preference relative to the polymer layer, in order to obtain a mixture having lowered or almost no polar preference relative to the surface. Therefore, the surface forces will not be strong enough to enforce splay.

According to a particular embodiment, the improvement of this polarity factor makes it possible to obtain grey level/multicolor switching, when the problem of assymmetry due to polar preference in surfaces has been remedied. According to this particular embodiment, the parallel surfaces are treated by rubbing and/or roughening, for obtaining a grain structure of crystal domains macroscopically showing as uniform but microscopically showing a multi-domain, fine-grained structure, and modulatable to a larger or smaller proportion by modifying an applied electric field pulse area Vτ.

The invention also envisages a method for aligning the liquid crystal of a liquid crystal device, with the liquid crystal being a ferroelectric C substance arranged between two parallel glass plates comprising a polymer, as known from e.g. US-A 4 367 924. According to the invention, the alignment is made by lowering the temperature into the C* phase under application of an AC field of 10-20 V and 100-500 Hz.

### Fundamental Conditions

Tilted smectic liquid crystals built from chiral molecules are ferroelectric as originally bv R.B. Meyer et al in their article of Journal de Physique 1975, Volume 36, page L-69. Hence these ferroelectric liquid crystals (FLC) offer the possibility of a linear and, in most circumstances, much stronger coupling with an external electric field than of the quadratic dielectric effect always present in liquid crystals due to their anisotropic properties. The simplest and for many purposes most interesting ferroelectric smectic is the chiral smectic C ohase. In this medium, denoted C*, the molecular director n̂ (being roughly equivalent to the optic axis) tilts away from the smectic layer normal by an angle ϑ, and the local polarization 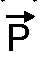 is everywhere perpendicular to the director. In its normal crystallographic state, the C* phase shows no ferroelectric domains; instead the dipole moments are continuously cancelled by 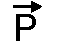 (and n̂) helixing around the direction of the layer normal, in a similar way as found for the magnetization in helimagnets. In SSFLC devices, the C* phase is however forced out of its bulk state by surface interaction. In the applied configuration ("bookshelf geometry", smectic layers being essentially perpendicular to the boundary glass plates which are just a few microns apart) the helix never forms and 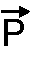 chooses either of two surface-stabilized directions, as disclosed in U.S. Patent No. 4,367,924. These "spin-up" and "spin-down" directions, respectively, correspond to ferroelectric domains appearing spontaneously, i.e. without the previous action of an external field, and being characteristic of SSFLC structures. The polarization 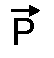 now follows the direction of a DC field applied across the sample leading to an electro-optic birefringence effect, between crossed polarizers, of high contrast and high speed (kHz to MHz range). With suitable surface treatment the switching can be bistable and can be accomplished by short pulses of about 3 to 30 volts amplitude. The effect has a certain threshold, strongly depending on the boundary conditions.

However, due to the very different nature of the physical effect employed, the question has been raised whether it will be possible to multiplex or matrix-address an SSFLC device in a similar manner as can be done for some of the other liquid crystal electro-optic effects, especially without using any active devices such as thin-film transistors (TFT) and similar high-cost and size-limiting elements. No analysis has yet been presented as for the basic physical requirements of such an addressing scheme.

The addressing scheme has to take account of the most unique and valuable property of the SSFLC geometry, except the speed, namely the bistability. This property is extremely sensitive to choice of materials and surface treatment and has been discussed in several articles like Clark et al, Mol.Cryst.Liq.Cryst. 1983, Volume 94, page 213, Lagerwall et al, Mol.Cryst.Liq.Cryst. 1984, Volume 114, page 151, Handschy et al, Ferroelectrics 1984, Volume 59, page 69, and Wahl et al, Ferroelectrics 1984, Volume 59, page 161. It is clear that a good, and especially symmetric, bistability has dramatic positive consequences for the multiplexibility of SSFLC devices and is, in fact, desirable for driving with non-active addressing elements. We therefore begin the discussion with a description of the appropriate alignment technique.

### Alignment and Bistability

The basic conditions for bistability are laid out in U.S. Patent No. 4,367,924, already referred to. We here give an improved method with the following advantages: it is more suited for large scale production than shear methods; it permits a larger cell thickness to be used; in many cases the threshold/bistability properties are ameliorated from nearly to almost perfectly symmetric.

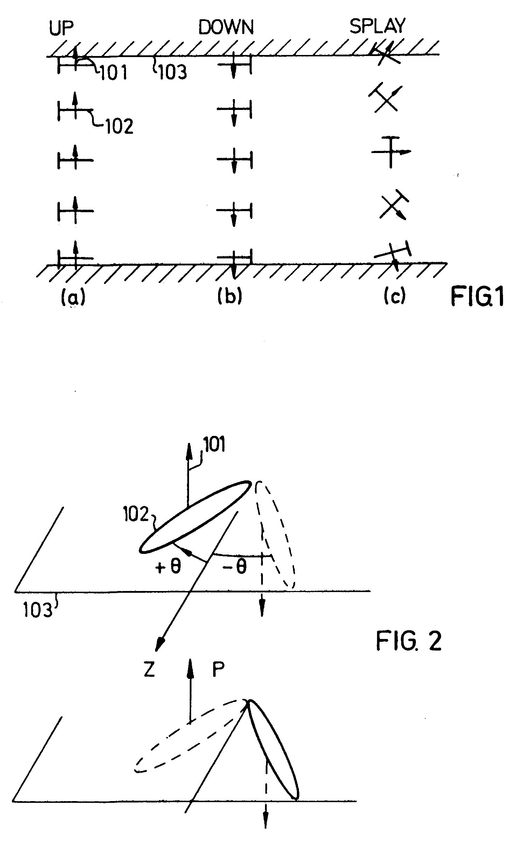

A closer look at any of the two equivalent, homogeneously polarized and bistable states of the basic SSFLC geometry shows (Figure 1) that these states require a certain asymmetry in the boundary condition at the opposite surfaces. This is because the polarization vector (101) in one case points into, in the other case out of, the boundary surface (103). (The corresponding direction of the molecular axis (102) is illustrated in the conventional way, i.e. with the head of the "nail" as thought coming out of the paper towards the observer.) One of these states must be intrinsically preferred because the polar interaction energy cannot be the same. The strength of this interaction and the energy difference depends on the ferroelectric material as well as on the surface coating material and how this has been treated. In many cases the interaction seems to be relatively weak, as for instance with compounds like 4′-(2-methyl-butyloxy or -hexyloxy) phenyl-4-alkyloxy-benzoates, which facilitates the homogeneously polarized states (a) and (b) in Fig. 1 even for relatively large cell thickness. In other cases, it can be quite strong, leading to a preference for the splay state (c), which is useless for electrostatic switching and has to be avoided. The tendency for splay, whether weak or strong, is general, and even if the state (c) can sometimes be forced into one of (a) and (b) by decreasing the cell thickness, thereby increasing the elastic deformation energy, it can also be counteracted in other ways. Suppose, for instance, that the state with the polarization vector pointing into the bounding surface (out of the liquid crystal) has the lower energy, as illustrated in Figure 2, when this surface is covered with polyimide (as commercially available from Merck AG). This is the +ϑ state of Figure 2. In this case, the unfavoured direction -ϑ should be supported by rubbing along that direction, in order to make the UP and DOWN polarization states as equivalent as possible at the surface. The lower surface should be treated exactly the same way and then turned around such that the rubbing direction is now the + direction (of Figure 2), when the cell is assembled. We have found that a gentle unidirectional rubbing with an artificial silk cloth works well on several surfaces. The action of alignment is facilitated by applying an above-threshold AC field of typically 10-20 volts and 100-500 Hz across the glass plates when going down in the C* phase. A slight shear perpendicular to the z direction is helpful but not necessary. A variation of this technique, for which the compensation effect is stronger, is to use tangential evaporation (i.e. 5-10° grazing incidence) of, e.g. SiO, which gives a similar effect as rubbing. A variation of this latter one is to evaporate in two directions, supporting both +ϑ and -ϑ and performing the evaporations in that order. From the physical discussion, as illustrated in Figures 1 and 2, it is clear that the symmetrization of the UP and DOWN states at the surface can be made in a large variety of ways, all having in common that the glass or plastic covering surfaces are treated in a compensating non-symmetric way, for instance by different mechanical or other treatment, or by different coating materials, or by both. It is also helpful, not only when switching, but already when filling an SSFLC cell, if the mixture has a negative dielectric anisotropy.

The polar preference has to be found out for each combination of materials. We have found that liquid crystal substances can be found that have the opposite preference when combined with a certain surface. Thus, by convenient uniting of such substances, a material can be achieved with lower or almost no polar preference, making possible the use of a larger cell thickness gap. An example of this is DOBAMBC and the chisso material CS-1011 which have the opposite polar preference and which may be mixed, e.g. by approximately equal parts.

Finally it may be pointed out that bistability can also be improved under certain conditions when defect-mediated. This will be discussed below in connection with grey scale.

### Grey Level and Multi-Color Switching

Referring to the basic optical and electrical properties of an SSFLC-cell discussed in the previous sections, we now briefly comment on some methods for displaying different grey levels and/or colors.

### a) Raster technique (space integration)

Like e.g. in conventional newspaper print one may use in the first place additive (or subtractive) mixing of the optical states of neighbouring pixels. In very thin cells with negligible eigen color one may integrate a redyellow-blue color filter as is currently available for TFT addressed TN-matrices. One may also use defined birefringent colors which can be obtained by preparing a cell with a stepwise varying layer thickness. Due to the field threshold different colors then need different values of Vτ and can be arranged to a repeated three-color pattern, controlled by selective addressing. A simple matrix addressing scheme is discussed in part c) below.

A disadvantage of the raster technique is that it requires an increased pixel density, but only spacially not electrically. It should only be mentioned here, that a gain in resolution can be obtained by applying proper digital data processing, e.g. by the binary grey scale technique (see below). Ideally one would require one pixel to display different grey levels or colors. To a rather limited extent this is possible with one of the following methods.

### b) Switching with different duty ratio (time integration).

Due to the fast response of FLC's one may permanently switch a display element with an adjustable ratio of the on and off time, where the frequency has to be high enough to avoid flickering. This method is easily applied to cases with "static" drive, but requires a large amount of extra electronics for data processing and storage especially in case of high resolution matrices. A general disadvantage of this time integrated switching is the increased power consumption.

### c) Multistate switching.

As has been earlier discussed in detail (U.S. Patent No. 4,563,059, filed 7 July 1983), one may obtain under certain conditions more than two switching states, especially in the higher ordered ferroelectric smectic phases. The additional states are partially stable without a holding field and also exhibit a treshold switching characteristic. In consequence a display element may be switched between different optical states by applying pulses with different Vτ. Driving is trivial in case of one pixel and linear array devices.

In practice, multistate switching can at present not be controlled sufficiently because of difficulties in producing proper alignment and uniform treshold values over big areas.

### d) Multi-domain switching (space integration).

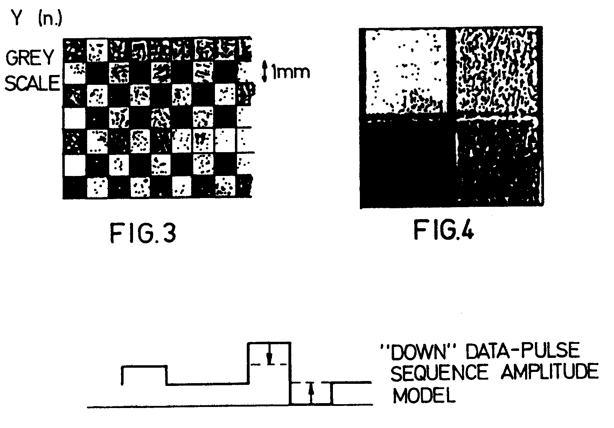

With certain cell preparation (see below) one can obtain a texture which from macroscopic sight shows an optically uniform appearance but has a multi-domain, fine grained structure when viewed under magnification. Such a texture exhibits excellent bistability, obviously due to strong adhering of disclination lines at the boundaries. The grainy structure somewhat reduces the overall maximum achievable contrast but one has the advantage of displaying several grey levels, in general being stable also in the absence of a driving field. If one modulates the pulse area Vτ around the threshold value for the ideal SSFLC-structure, one may switch a larger or smaller number of domains within one pixel. Space integration results, as in method a), in different grey levels but with the advantage of higher resolution. Fig. 3 shows a part of a matrix pattern with 5 distinguishable grey levels. Fig. 4 illustrates the fine structure.

The grain structure was obtained in thin cells with polyimide surface coatings under different conditions:
- gently rubbing one surface and shearing the filled cell in the Sm C* phase parallel and at an angle to the rubbing direction
- gently rubbing both surfaces in slightly different directions
- using for one or both cell boundaries glass plates with a rough surface, total roughness 20% to 50% of the medium cell thickness. The roughness results in locally varying pulse threshold, so that the steepness of the overall switching characteristic can be decreased (within the limit allowable for matrix addressing). Thus partially switching one pixel with well defined pulses becomes possible.

### Device Materials

Working devices have been built with an increasing variety of ferroelectric materials, beginning from pure smectic C* compounds, but now being mixtures of increasing complexity. Future devices will invariably contain mixtures, advantageous for their easier alignment and better thermal stability. Optimization of material parameters like dielectric anisotropy, birefringence, helical pitch and tilt angle or even conductivity can only be achieved in mixtures and with added dopants. More ordered smectic phases can also be used, with slower response but sometimes with the additional possibility of intrinsic multistability or at least achievable multiple states. It should be pointed out that any chiral tilted smectic can be used, or any tilted smectic, also in polymeric or polymerized forms, acting as matrix or solvent for chiral dopants, and in which chiral polar molecules, or parts of molecules, are switching their optic axes according to the ferroelectric (and unavoidably also the dielectric) interaction with an applied field. Dichroic dopants will also be increasingly common, and dichroic and chiral polar dopant molecules could conveniently be the same molecular species.

Also for the enclosure of the active material a large variety of materials can and will be used, in adjustment to different applications. Thus the active material can be enclosed by glass, plastics, polymer films and, when itself a polymer, have no need for enclosing materials except for conductive coating for applying the field. Active SSFLC material can also be covered by thin plastics or microencapsulated and manufactured as polymer sheets and films. If containing a dichroic dye such a product would be an electrically controllable sheet polarizer. The microencapsulating technique is described and discussed in European Patent Applications No. 84301911.8 and 84302140.3. The different embodiments described so far can be designed as being in an encapsulated form with small single domains ("small particle suspension") acting as SSFLC droplets in polymer coating. The surface stabilization is efficient because of the large surface and small droplet dimension, effectively quenching the helix. The advantage with encapsulated SSFLC in comparison with the encapsulated liquid crystals described in the above-mentioned Applications would first be the higher speed and second that the SSFLC embodiment is capable of being in two activated states at zero voltage, i.e. with no sustaining field. Due to the multidomain structure, the voltage threshold range is also comparatively broad with a correspondingly good grey scale capability. A similar but different embodiment would instead use a thin sheet of a highly porous medium that would suck up the FLC to cover its large internal surface.

### SSFLC components in systems

Improvements in alignment-controlled threshold and bistabi- lity properties may enormously facilitate driving problems and simplify the electronics both for single element devi- ces, linear arrays and matrix arrays. An electro-optic modulator can be driven in a monostable mode but this generally requires much higher power and gives special difficulties at low frequencies. The same is true for switches and deviators working either with refraction index controlled Brewster angle or with dichroic dopants. All electro-optic modulators working on the dichroic principle can, with convenient choice of dye, operate in the infrared or ultraviolet rather than in the visible.

With the high speed of SSFLC devices the very disturbing flicker due to the present slow nematic modulators would be obviated leaving an additional room for a large data-handling and image-treatment capability.

In a two-dimensional array the improved bistability, together with addressing schemes characterized by a high discrimination ratio, would allow the construction of compact optical processors with memory. To safely scan the content of such a memory a significant but undercritical (non-latching) pulse will be applied to each element in turn, on which the element may or may not shortly respond and then go back to its initial state, i.e. keep its information. Bistability and economic driving sequences are also essential for high-performance linear arrays which could be handling large amounts of information, for instance in printing, but more generally in optics, where an increasing number of storage and output devices have a binary character. We state an example where we think that the stated addressing principles in combination with a bistable linear array would be ideally suited. It is well known that high quality halftone pictures like photographs can be generated by coding the image content in binary form. The grey scale is contained in the positioning of the equal dots rather than in the size as in conventional raster printing. Many different coding systems are available, of which the error diffusion linearization method and some related algorithms are most convenient for our purpose. This method is described in Floyd et al, Proc.SID 1976, Volume 17, page 78; of also Bryngdahl, J.Opt.Soc.Am. 1978, Volume 68, page 416, Billotet-Holfmann et al, Proc.SID 1983, Volume 24, page 253, and Hauck et al J.Opt.Soc.Am.A., 1984, Volume 1, page 5. In the described application the photographic picture is optically scanned a line at a time and the digitalized content stored in relation to the first periodic raster comprised of the elements of the linear array. The sequentially generated information is then printed with a conventional electro-photographic process. With the driving schemes outlined above, a bistable linear array can be coupled to a simple microprocessor and embodies an extremely compact electronically controlled printing device capable of generating black-and-white half-tone pictures, and of printing whole pages or page plates for journals and magazines, thereby treating text and pictures in the same way and generating them in the same scan. Colour pictures would require three subsequent scans. This small device in fact constitutes the heart of a small non-impact printing press. In an analogous way it can be used for the computer-controlled manufacturing of synthetic holograms and for many similar tasks, readily recognized by any one skilled in the art.

## Claims

1. A liquid crystal device having a liquid crystal layer arranged between two parallel surfaces comprising a polymer, said liquid crystal comprising a mixture of ferroelectric liquid crystal substances and arranged in bookshelf geometry and bistably switchable between two states, **characterized in** that said liquid crystal substances comprise a pair of substances having opposite surface polar preferences relative to said polymer, said mixture having lowered or almost no polar preference at said surfaces, for avoiding non-symmetric splayed states ad for obtaining full symmetry of said states with regard to polarity inversion of an applied electrical field.

2. A liquid crystal device of claim 1, for displaying grey levels and/or colors, **characterized in** that said parallel surfaces are treated by rubbing and/or roughening, for obtaining a grain structure of crystal domains macroscopically showing a optically uniform appearance but having a multi-domain, fine-grained structure when viewed under magnification, ad modulatable to a larger or smaller proportion by modifying an applied electric field pulse area Vτ.

3. A method of aligning the liquid crystal layer in preparation of the liquid crystal device as claimed in any preceding claim, comprising unidirectionally rubbing said polymer containing parallel surfaces, reversing the direction of only one of said surfaces on assembly of the device ad applying an AC field of 10-20 V and 100-500 Hz when the temperature is lowered into the C* phase.

## Patentansprüche

1. Flüssigkristallvorrichtung mit einer Flüssigkristallschicht, die zwischen zwei parallelen Oberflächen angeordnet ist, die ein Polymer enthalten, wobei der Flüssigkristall eine Mischung aus ferroelektrischen Flüssigkristallsubstanzen umfaßt und in Buchregalgeometrie angeordnet und zwischen zwei Zuständen bistabil schaltbar ist, dadurch **gekennzeichnet**, daß die Flüssigkristallsubstanzen zwei Substanzen mit entgegengesetzten Oberflächen-Polaritätsvorzugsrichtungen relativ zu dem Polymer umfassen, wobei die Mischung eine herabgesetzte oder nahezu keine polare Vorzugsrichtung an den Oberflächen aufweist zur Vermeidung von unsymmetrischen schiefen Zuständen und zur Erzielung einer vollen Symmetrie der Zustände bezüglich Polaritätsumkehr eines angelegten elektrischen Feldes.

2. Flüssigkristallvorrichtung nach Anspruch 1 zur Darstellung von Graustufen und/oder Farben, dadurch **gekennzeichnet**, daß die parallelen Oberflächen durch Reiben und/oder Aufrauhen behandelt sind zur Erzielung einer Kornstruktur von Kristalldomänen, die makroskopisch ein optisch gleichförmiges Aussehen haben, aber bei Betrachtung unter Vergrößerung eine feinkörnige Multidomänenstruktur haben, und die in einem größeren oder kleineren Maß durch Modifizieren der Impulsfläche Vτ eines angelegten elektrischen Feldes modulierbar ist.

3. Verfahren zum Ausrichten der Flüssigkristallschicht bei der Herstellung der Flüssigkristallvorrichtung nach einem der vorangehenden Ansprüche, **gekennzeichnet** durch unidirektionales Reiben der das Polymer enthaltenen parallelen Oberflächen, Umkehren der Richtung nur einer der Oberflächen bei Zusammenbau der Vorrichtung, und Anlegen eines Wechselfeldes von 10 bis 20 V und 100 bis 500 Hz, wenn die Temperatur in die C*-Phase abgesenkt wird.

## Revendications

1. Dispositif à cristal liquide, comprenant une couche de cristal liquide disposée entre deux surfaces parallèles comprenant un polymère, ledit cristal liquide étant composé d'un mélange de substances cristallines liquides ferroélectriques, et ayant une configuration en étagères et étant commutable de façon bistable entre deux états, caractérisé en ce que lesdites substances cristallines liquides comprennent une paire de substances ayant des préférences polaires superficielles opposées relativement audit polymère, ledit mélange ayant une préférence polaire réduite ou presque nulle au niveau desdites surfaces, afin d'éviter les états biaisés non symétriques et d'obtenir une symétrie complète desdits états vis-à-vis de l'inversion de polarité d'un champ électrique appliqué.

2. Dispositif à cristal liquide selon la revendication 1 pour la visualisation de niveaux de gris et/ou de couleurs, caractérisé en ce que lesdites surfaces parallèles sont traitées par brossage et/ou sont rendues rugueuses, pour obtenir une structure granulaire de domaines cristallins qui présente macroscopiquement un aspect optiquement uniforme, mais qui a une structure à grains fins à domaines multiples à l'examen sous grossissement, et qui est modulable vers une plus grande ou une plus petite proportion par modification de l'aire d'impulsion Vτ d'un champ électrique appliqué.

3. Procédé d'alignement de la couche de cristal liquide dans la préparation du dispositif a cristal liquide selon la revendication 1 ou 2, comprenant le brossage dans un seul sens desdites surfaces comportant un polymère, l'inversion du sens d'une seule desdites surfaces a l'assemblage du dispositif et l'application d'un champ de courant alternatif de 10-20 V et de 100-500 Hz lorsque la température est abaissée dans la phase C*.
